(19) **Europäisches Patentamt**

**European Patent Office**

**Office européen des brevets**

(11) Numéro de publication : **0 384 836 B1**

(12) **FASCICULE DE BREVET EUROPEEN**

(45) Date de publication du fascicule du brevet :
**29.04.92 Bulletin 92/18**

(51) Int. Cl.⁵ : **B60K 37/04**

(21) Numéro de dépôt : **90400478.5**

(22) Date de dépôt : **21.02.90**

(54) **Dispositif de fixation d'un élément articulé.**

(30) Priorité : **24.02.89 FR 8902856**

(43) Date de publication de la demande :
**29.08.90 Bulletin 90/35**

(45) Mention de la délivrance du brevet :
**29.04.92 Bulletin 92/18**

(84) Etats contractants désignés :
**DE GB IT**

(56) Documents cités :
**DE-A- 3 020 886**
**US-A- 4 194 585**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Delaunay, Pascal**
**12, Boulevard Descartes**
**F-78180 Montigny-Le-Bretonneux (FR)**

(74) Mandataire : **Boivin, Claude**
**9, rue Edouard-Charton**
**F-78000 Versailles (FR)**

EP 0 384 836 B1

## Description

Les supports de boîtiers électroniques disposés dans la planche de bord d'un véhicule automobile sont généralement fixés par vis et écrous. Mais il est difficile de maintenir le support et d'assurer en même temps sa fixation à la planche de bord.

On pourrait prévoir un simple montage articulé mais il risque alors de se produire des vibrations engendrant des bruits désagréables dans un véhicule.

La présente invention a pour objet un dispositif de fixation d'un panneau de fermeture, notamment d'un espace disposé sous la planche de bord d'un véhicule automobile, dans lequel tout risque de vibration est supprimé.

Ce dispositif de fixation selon l'invention qui est du type comportant au moins une articulation maintenue en place par des moyens élastiques est caractérisé en ce que l'axe d'articulation est matérialisé par une gouttière ménagée sur le panneau et coopérant avec un support fixé sur le véhicule, les moyens élastiques maintenant en appui le fond de la dépression sur le support, la mise en place s'effectuant par une translation du panneau parallèlement à son plan moyen.

De préférence, la dépression est ménagée dans une languette 7 du panneau 1 propre à être ménagée dans une ouverture 6 du support 3 de façon que son extrémité soit plaquée contre une paroi 3a de ce support sensiblement perpendiculaire au plan de l'ouverture 6.

Dans un premier mode de réalisation, le dispositif comporte un ressort, de section transversale sensiblement en forme de U, qui peut être fixé par agrafage sur le support et dont l'une des branches latérales est prolongée par une ou plusieurs pattes propres à presser l'extrémité de la languette sur la paroi.

L'extrémité de la ou des pattes est de préférence en forme de gouttière cylindrique. Dans un second mode de réalisation, la languette comporte un repli à son extrémité. Il suffit d'engager la languette dans l'ouverture jusqu'à ce que l'extrémité de la languette vienne prendre appui sur ladite paroi et de déplacer l'élément de façon que la languette soit au contact du bord de ladite ouverture.

On a décrit ci-après, à titre d'exemples non limitatifs, deux modes de réalisation du dispositif selon l'invention avec référence aux dessins annexés dans lesquels.

La Figure 1 est une vue en perspective d'un premier mode de réalisation, les deux éléments étant séparés l'un de l'autre;

La Figure 2 est une vue semblable à la Figure 1, les deux éléments étant assemblés l'un à l'autre;

La Figure 3 est une vue en perspective d'un second mode de réalisation, les deux éléments étant séparés l'un de l'autre;

La Figure 4 est une vue semblable à la Figure 3, les deux éléments étant assemblés l'un à l'autre.

Aux dessins, on voit un support 1 sur lequel des boîtiers électroniques peuvent être fixés et qui doit être monté de manière articulée sur un panneau 3 pouvant lui-même être fixé sous la planche de bord d'un véhicule automobile. A sa partie inférieure, ce panneau 3 présente un repli 3a à 90°.

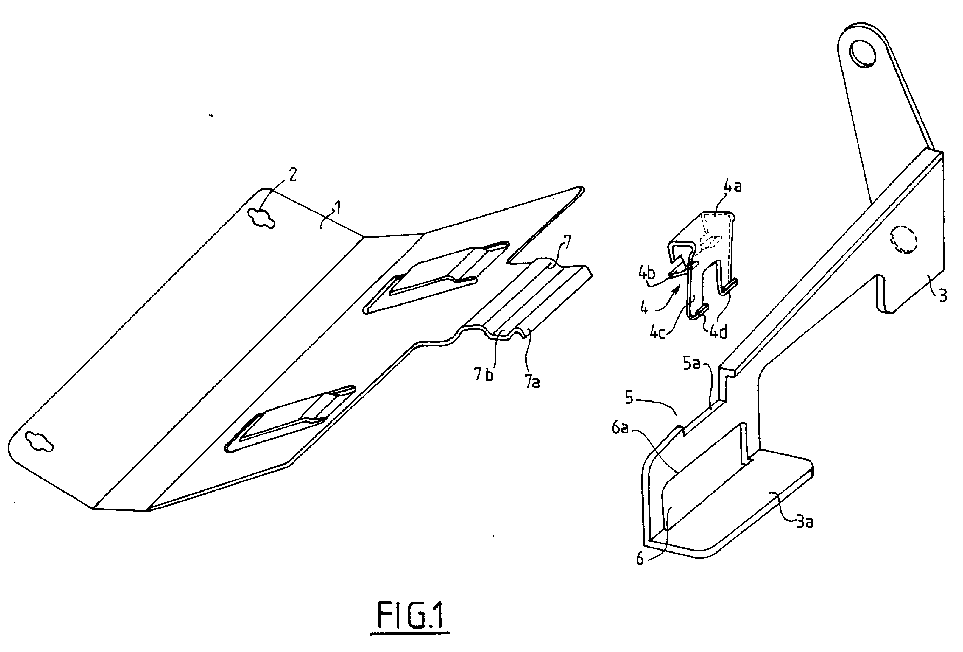

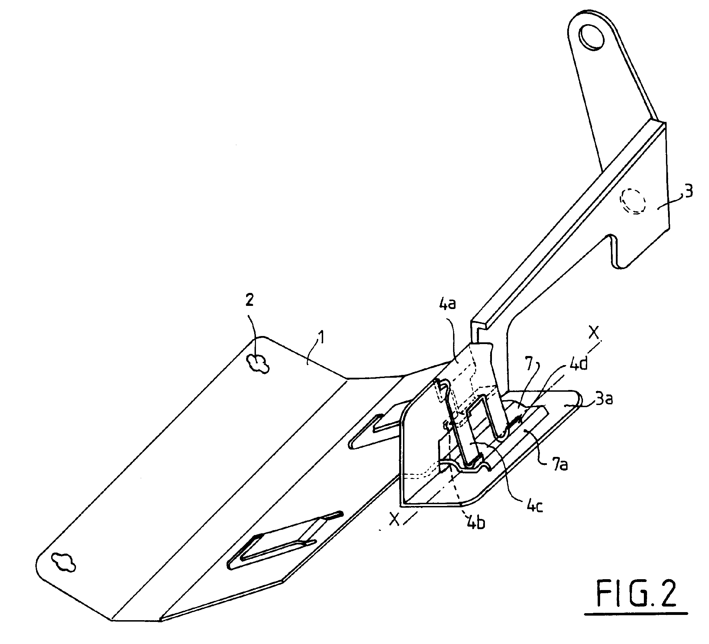

Dans le mode de réalisation des Figures 1 et 2 il est prévu un ressort 4 qui a une section transversale sensiblement en forme de U. Le ressort peut être chaussé sur le panneau 3, la branche centrale 4a du ressort venant en appui sur le bord inférieur 5a d'une échancrure 5 prévue dans le panneau; l'une des branches latérales du ressort 4 présente à sa partie inférieure des replis 4b, orientés obliquement vers le haut et vers l'autre branche latérale, qui viennent alors se clipser sous le bord supérieur 6a de l'ouverture 6 ménagée dans la plaque 3, le bord inférieur de cette ouverture étant au niveau du repli 3a. L'autre branche latérale du ressort 4 est prolongée par deux pattes 4c qui sont terminées par des gouttières cylindriques 4d; ces pattes ont une longueur telle que les gouttières 4d se trouvent pratiquement au niveau du repli 3a de la plaque 3 quand le ressort est chaussé sur le panneau 3.

De son côté le support 1 est prolongé par une languette 7 qui peut être insérée à travers l'ouverture 6 en étant alors plaquée sur le repli 3a par les gouttières cylindriques 4d; le bord de la languette 7 est replié vers le bas comme indiqué en 7a, et elle présente une dépression 7b à une faible distance de cette extrémité. Dans ces conditions, le support 1 peut pivoter par rapport à la plaque 3, autour de l'axe X-X des gouttières reposant sur la dépression 7b, ce qui permet de le relever; en position haute, il est fixé à la planche de bord par des vis traversant des trous 2. Le repli 7a est alors plaqué contre la paroi 3a ce qui évite toute vibration.

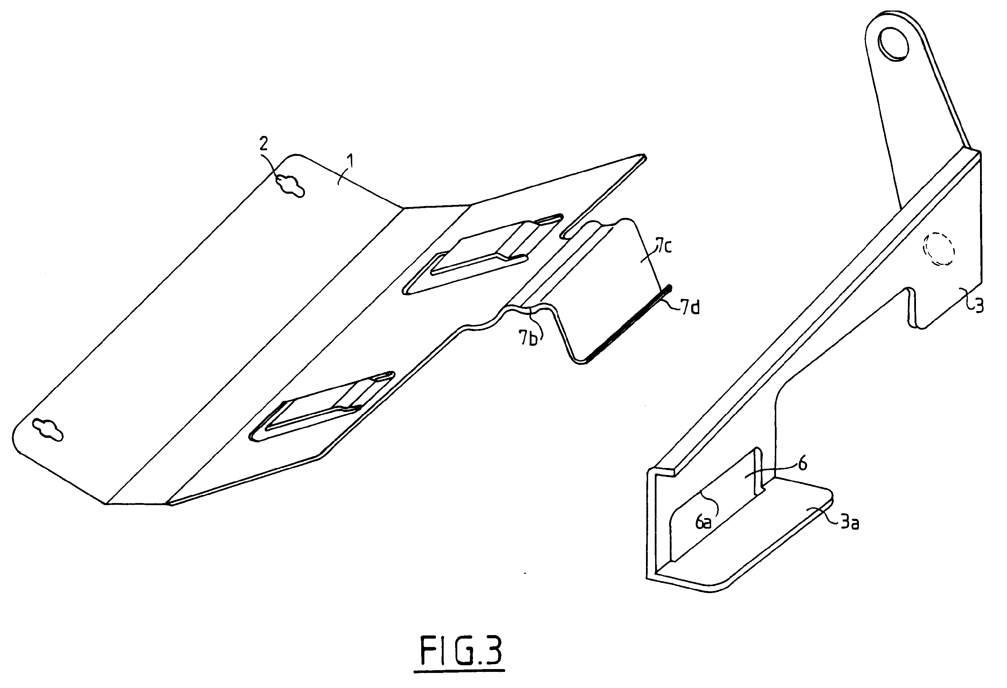

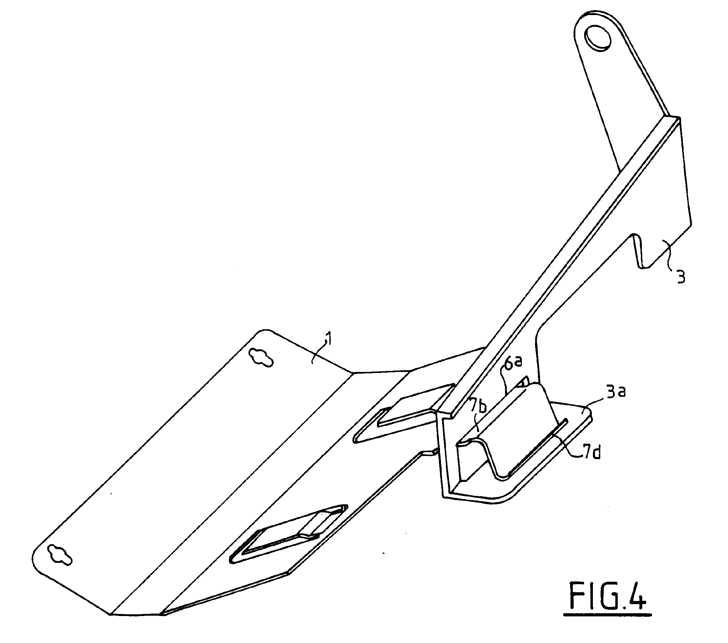

Dans le mode de réalisation des Figures 3 et 4, il n'est pas prévu de ressort 4 indépendant mais la languette 7 comporte un prolongement 7c qui est dirigé vers le bas et terminé par une gouttière cylindrique 7d. Pour monter le support 1, on engage la languette dans l'ouverture 6 et on remonte le support de façon que la languette 7 vienne en appui sur le bord supérieur 6a de l'ouverture 6; en même temps, la gouttière 7d vient s'arc-bouter sur le repli 3a de la plaque 3. Quand on relève le support 1, il pivote autour de l'arête du bord 6a de l'ouverture 6, en appui sur le repli 3 par la languette 7 et l'arc-boutement de la languette 7 contre le repli 3a évite tout risque de vibrations.

## Revendications

1. Dispositif de fixation d'un panneau de fermeture (1), notamment d'un espace disposé sous la planche de bord d'un véhicule automobile, du type comportant au moins une articulation maintenue en place par des moyens élastiques (4c-3a ou 7c ou 3a), caractérisé en ce que l'axe d'articulation est matérialisé par une dépression cylindrique (7b) ménagée sur le panneau (1) et coopérant avec un support (3) fixé sur le véhicule, les moyens élastiques maintenant en appui le fond de la dépression (7b) sur le support (3), la mise en place s'effectuant par une translation du panneau parallèlement à son plan moyen.

2. Dispositif selon la revendication 1, caractérisé en ce que la dépression est ménagée dans une languette (7) du panneau (1) propre à être engagée dans une ouverture 6 du support (3) de façon que son extrémité soit plaquée contre une paroi (3a) de ce support sensiblement perpendiculaire au plan de l'ouverture (6).

3. Dispositif selon la revendication 2, caractérisé en ce qu'il comporte un ressort (4), de section transversale sensiblement en forme de U, qui peut être fixé par agrafage sur le support (3) et dont l'une des branches latérales est prolongée par une ou plusieurs pattes (4c) propres à presser l'extrémité de la languette sur la paroi (3a).

4. Dispositif selon la revendication 3, caractérisé en ce que l'extrémité de la ou des pattes (4) est en forme de gouttière cylindrique.

5. Dispositif selon la revendication 3 ou 4, caractérisé en ce que le bord (7a) de la languette (7) est replié de façon à venir au contact de la paroi (3a).

6. Dispositif selon la revendication 2, caractérisé en ce que la languette (7) comporte un prolongement replié (7c) propre à prendre appui sur la paroi (3a).

7. Dispositif selon la revendication 6, caractérisé en ce que le prolongement (7c) est terminé par une gouttière (7d).

**Patentansprüche**

1. Vorrichtung zur Befestigung einer Verschlußplatte (1), insbesondere für einen unter dem Instrumentenbrett eines Kraftfahrzeugs angeordneten Raum, von der Bauart, die mindestens ein Gelenk aufweist, das durch elastische Mittel (4c-3a oder 7c oder 3a) in seiner Lage festgehalten wird, dadurch gekennzeichnet, daß die Achse des Gelenks durch eine zylindrische Vertiefung (7b) verkörpert wird, die auf der Platte (1) angeordnet ist und mit einer am Fahrzeug befestigten Halterung (3) zusammenwirkt, wobei die elastischen Mittel den Boden der Vertiefung (7b) an der Halterung (3) anliegend festhalten und die Montage durch eine Verschiebung der Platte parallel zur ihrer Mittelebene bewirkt wird.

2. Vorrichtung nach Anspruch 1, dadurch gekennzeichnet, daß die Vertiefung in einer Zunge (7) der Platte (1) angeordnet ist, welche dafür geeignet ist, in eine Öffnung (6) der Halterung (3) derart eingesetzt zu werden, daß ihr Ende auf einer im wesentlichen senkrecht zur Ebene der Öffnung (6) ausgerichteten Wand (3a) dieser Halterung aufliegt.

3. Vorrichtung nach Anspruch 2, dadurch gekennzeichnet, daß sie eine Feder (4) mit im wesentlichen U-förmigem Querschnitt aufweist, welche durch Anklammern an der Halterung (3) befestigt sein kann und deren einer Seitenschenkel durch eine oder mehrere Laschen (4c) verlängert ist, welche dazu geeignet sind, das Ende der Zunge an die Wand (3a) anzudrücken.

4. Vorrichtung nach Anspruch 3, dadurch gekennzeichnet, daß das Ende der Lasche bzw. der Laschen (4) die Form einer zylindrischen Rinne besitzt.

5. Vorrichtung nach Anspruch 3 oder 4, dadurch gekennzeichnet, daß der Rand (7a) der Zunge (7) derart umgebogen ist, daß er in Kontakt mit der Wand (3a) kommt.

6. Vorrichtung nach Anspruch 2, dadurch gekennzeichnet, daß die Zunge (7) eine umgebogene Verlängerung (7c) aufweist, die dazu geeignet ist, sich an der Wand (3a) abzustützen.

7. Vorrichtung nach Anspruch 6, dadurch gekennzeichnet, daß die Verlängerung (7c) mit einer Rinne (7d) abgeschlossen ist.

**Claims**

1. Device for fixing a closing panel (1), especially a space disposed under the instrument panel of a motor vehicle, of a type comprising at least one joint kept in place by elastic means (4c-3a or 7c or 3a), wherein the joining axis is materialized by a cylindrical vacuum (7b) provided on the panel (1) and cooperating with a support (3) secured to the vehicle, the elastic means keeping the bottom of the vacuum (7b) in support on the support (3), fitting being effected via a translation of the panel parallel to its mean plane.

2. Device according to claim 1, wherein the vacuum is provided in a lug (7) of the panel (1) and able to be engaged in one opening 6 of the support (3) so that its extremity is clad against one wall (3a) of this support approximately parallel to the plane of the opening (6).

3. Device according to claim 2, wherein it comprises a spring (4) with an approximately U-shaped transversal section and able to be stapled onto the support (3) and with one of its lateral branches being extended by one or several brackets (4c) able to press the extremity of the lug onto the wall (3a).

4. Device according to claim 3, wherein the extremity of the bracket(s) (4) has the shape of a cylindrical drain trough.

5. Device according to claim 3 or 4, wherein the edge (7a) of the lug (7) is folded back so as to come into contact with the wall (3a).

6. Device according to claim 2, wherein the lug (7) comprises a folded back elongation (7c) able to take support on the wall (3a).

7. Device according to claim 6, wherein the elongation (7c) is ended by a drain trough (7d).

FIG.1

FIG.2

FIG.3

2  1  7c  7d  7b  7

EP 0 384 836 B1

3  6  6a  3a

FIG.4

EP 0 384 836 B1